# EUROPÄISCHE PATENTSCHRIFT

(11) **EP 3 714 678 B1**
(45) Veröffentlichungstag und Bekanntmachung des Hinweises auf die Patenterteilung: **07.09.2022**
(21) Anmeldenummer: 19214372.5
(22) Anmeldetag: 09.12.2019
(51) Int. Cl.: A01F 7/06

(54) **AXIALABSCHEIDER FÜR EINEN MÄHDRESCHER**
AXIAL SEPARATOR FOR A COMBINE HARVESTER
SÉPARATEUR AXIAL POUR UNE MOISSONNEUSE-BATTEUSE

(30) Priorität: 27.03.2019 DE 102019107822
(43) Veröffentlichungstag der Anmeldung: 30.09.2020
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Bußmann, Jens, 49179 Ostercappeln (DE)
(74) Vertreter: CLAAS Gruppe

(56) Entgegenhaltungen:
- EP-A1- 1 859 671
- EP-A2- 1 964 465
- EP-B1- 2 364 587
- WO-A2-2019/199898

## Beschreibung

Die vorliegende Anmeldung betrifft ein Verfahren zum Betrieb eines Axialabscheiders gemäß Anspruch 1.

Der Axialabscheider dient dazu, aus einem ihm zugeführten Erntegutstrom einen Gutanteil abzuscheiden. Dieser Gutanteil ist in aller Regel von Körnern gebildet, die mittels des zugehörigen Mähdreschers gewonnen werden sollen, während Pflanzenreste der jeweiligen Pflanzen aus dem Mähdrescher ausgeworfen werden. Die Lösung der Körner von der jeweiligen restlichen Pflanze erfolgt mittels des Dreschorgans, worauf hin die losgelösten Körner von den Pflanzenresten getrennt werden müssen. Um dies zu bewerkstelligen, umfasst der Axialabscheider ein Gehäuse, innerhalb dessen sich ein drehantreibbar gelagerter Abscheiderotor erstreckt. Das Gehäuse weist einen Aufnahmebereich auf, um einen zu bearbeitenden Erntegutstrom von dem Dreschorgan zu übernehmen. Ausgehend von dem Aufnahmebereich wird der Erntegutstrom innerhalb eines Abscheidebereichs des Axialabscheiders bearbeitet, wobei der Abscheiderotor mit dem Gehäuse derart zusammenwirkt, dass der in dem Erntegutstrom enthaltene Gutanteil aus dem Erntegutstrom abgeschieden wird. Letzterer ist auf diese Weise in einen Restgutstrom überführbar, der getrennt von den Gutanteil vorliegt. Stromabwärts des Abscheidebereichs, typischerweise unmittelbar daran anschließend, umfasst das Gehäuse weiterhin einen Abgabebereich, von dem ausgehend der Restgutstrom aus dem Axialabscheider abgegeben wird. Der Restgutstrom, der insbesondere Spreu und Stroh umfassen kann, wird in aller Regel einem dem Axialabscheider nachgeschalteten Häcksler zugeführt und vor dem Auswurf aus dem Mähdrescher an dessen rückwärtigem Ende zerkleinert.

Um den Restgutstrom möglichst gleichmäßig dem Häcksler zuzuführen, weist der Axialabscheider ein dem Abgabebereich zugeordnetes Leitelement auf, mittels dessen eine Strömungsrichtung des aus dem Abgabebereich austretenden Restgutstroms beeinflussbar ist. Insbesondere dient das Leitelement dazu, den Restgutstrom abzulenken und hierdurch in einer gewünschten Weise auf den Häcksler zu verteilen. Dies geschieht letztlich mit der Zielsetzung, eine gleichmäßige Beschickung des Häckslers und hierdurch begünstigt eine gleichmäßige Verteilung der aus dem Mähdrescher abgegebenen Erntegutreste auf dem Feld zu erzielen.

Axialabscheider der eingangs beschriebenen Art sind im Stand der Technik bereits bekannt. Hierzu wird beispielhaft auf die Europäische Patentschrift EP 2 364 587 B1 hingewiesen. Diese beschreibt einen gattungsgemäßen Axialabscheider, der ein relativ zu dem Gehäuse bewegbares Leitelement aufweist. Die Bewegbarkeit des Leitelements hat den Vorteil, dass ein Grad der Beeinflussung des Restgutstroms durch das Leitelement im Zuge der Abgabe aus dem Axialabscheider veränderbar ist. Hierzu kann das Leitelement insbesondere mit einem Aktor zusammenwirken, mittels dessen eine Lageänderung des Leitelements bewirkbar ist. Auch ist es bekannt, eine automatisierte Verstellung des Leitelements relativ zu dem Gehäuse des Axialabscheiders vorzunehmen, wobei die Automatisierung beispielsweise in Abhängigkeit von mindestens einem Ernteparameter und/oder mindestens einen Arbeitsparameter erfolgen kann. Hierdurch kann eine fortwährende Anpassung der Position des Leitelements relativ zu dem Gehäuse erfolgen.

Ein weiterer Axialabscheider ist aus der EP 1 964 465 A2 bekannt, wobei das variable Leitelement eine Randkante aufweist, die zumindest teilweise schräg ausgebildet ist. Dies erlaubt eine zusätzliche Anpassung an die Eigenschaften des Ernteguts.

Trotz diesen im Stand der Technik bekannten Einstellmöglichkeiten betreffend das Leitelement hat sich herausgestellt, dass die Verteilung des Restgutstroms auf den dem Axialabscheider nachgeschalteten Häcksler weiter verbessert werden kann.

Der vorliegenden Anmeldung liegt mithin die Aufgabe zugrunde, einen Axialabscheider bereitzustellen, bei dem die Verteilung des Restgutstroms im Zuge der Abgabe desselben aus dem Axialabscheider gegenüber dem Stand der Technik weiter verbessert ist.

Die zugrunde liegende Aufgabe wird erfindungsgemäß durch ein Verfahren zum Betrieb eines Axialabscheiders mit den Merkmalen des Anspruchs 1 gelöst. Vorteilhafte Ausgestaltungen ergeben sich aus den Unteransprüchen 2 bis 10.

Erfindungsgemäß ist mindestens eine Randkante des Leitelements zumindest teilweise, vorzugsweise vollständig, schräg und/oder gestuft ausgebildet ist. Das Leitelement umfasst dabei definitionsgemäß zwei "Randkanten", die - in Richtung der Längsachse des Abscheiderotors betrachtet - an dem Leitelement einander gegenüberliegend ausgebildet sind. Mithin gibt es eine "vordere Randkante" sowie eine "hintere Randkante", wobei die vordere Randkante einen dem restlichen Axialabscheider zugewandten und die hintere Randkante den dem restlichen Axialabscheider abgewandten seitlichen Abschluss des Leitelements bilden. Die Randkante kann auch als "Abwurfkante" bezeichnet werden.

Die schräge und/oder gestufte Ausgestaltung mindestens einer Randkante des Leitelements führt dazu, dass dessen Grundfläche gegenüber einem Leitelement mit einem typischerweise rechteckigen oder rechteckförmigen Grundriss reduziert ist. Dies hat zur Folge, dass das erfindungsgemäß ausgebildete Leitelement eine verringerte Umlenkwirkung bezogen auf den Restgutstrom aufweist. Dies liegt darin begründet, dass aus dem Gehäuse des Axialabscheiders austretende Bestandteile des Restgutstroms teilweise gewissermaßen "durch das Leitelement hindurch fallen", während sie bei einem Leitelement eines Axialabscheiders gemäß dem Stand der Technik auf das Leitelement getroffen und infolgedessen umgelenkt worden wären. Dieses "Durchfallen" des Restguts durch den infolge der schrägen Ausgestaltung der mindestens einen Randkante geschaffenen Freiraum hat zur Folge, dass unabhängig von einer Stellung des Leitelements relativ zu dem Gehäuse stets eine gewisse Menge des aus dem Abgabebereich abgegebenen Restguts nicht umgelenkt wird und folglich direkt nach unten in den nachgeschalteten Häcksler fällt. Auf diese Weise wird der Häcksler fortwährend (und somit insbesondere auch dann, wenn sich das Leitelement beispielsweise in seiner Verteilposition befindet) über seine gesamte Länge hinweg mit Restgut beschickt.

In einer vorteilhaften Ausgestaltung des erfindungsgemäßen Verfahrens ist die dem Abgabebereich abgewandte Randkante schräg oder gestuft ausgebildet. Aufgrund der Strömungscharakteristik des Restgutstroms im Zuge der spiralartigen Führung entlang des Gehäuses ist in aller Regel der "hintere Teil", das heißt der dem Abgabebereich abgewandte Teil des Leitelements, stärker mit dem Restgut beaufschlagt als der dem Abgabebereich zugewandte Teil des Leitelements. Die Ausbildung der schrägen oder gestuften Form an der dem Abgabebereich abgewandten Randkante hat mithin zur Folge, dass der gewünschte Effekt der Nichtbeeinflussung des Restgutstroms in nicht-vernachlässigbarem Umfang zum Tragen kommt.

Ferner kann es besonders vorteilhaft sein, wenn das Leitelement ein Längen-Breiten-Verhältnis von höchstens 4:1, vorzugsweise 3,5:1, weiter vorzugsweise 3:1, aufweist. Im Vergleich zum Stand der Technik ist das Leitelement des erfindungsgemäßen Axialabscheiders mithin breiter ausgebildet, sodass die schräge oder gestufte Ausgestaltung an einer Randkante des Leitelements vorgenommen werden kann, ohne dass das Leitelement als solches in seiner Breite zu stark reduziert wird.

Das erfindungsgemäße Verfahren weiter ausgestaltend ist das Leitelement in Umfangsrichtung des Gehäuses gekrümmt ausgebildet, sodass es einer Krümmung des Gehäuses bezogen auf die Längsachse des Abscheiderotors angepasst ist. Mit einer solchen Ausgestaltung kann das Leitelement besonders gut unmittelbar an einer Wandung des Gehäuses geführt werden, wobei es sich mit seiner Krümmung unmittelbar an das Gehäuse anpasst. Dies ist im Hinblick auf eine Verstellbarkeit des Leitelements in Umfangsrichtung des Gehäuses besonders vorteilhaft, wie sich besonders anschaulich anhand des untenstehenden Ausführungsbeispiels ergibt. Vorteilhafterweise ist an einer Wandung des Gehäuses eine Führungseinrichtung ausgebildet, entlang der das Leitelement in Umfangsrichtung geführt werden kann.

In einer weiterhin vorteilhaften Ausgestaltung des erfindungsgemäßen Verfahrens ist ein Aktor, mittels dessen das Leitelement relativ zu dem Gehäuse bewegbar ist, elektrohydraulisch angetrieben. Insbesondere kann der Aktor von einem elektrohydraulischen Zylinder gebildet sein. Ein auf diese Weise ausgebildete Aktor hat den besonderen Vorteil, dass er das Leitelement vergleichsweise schnell bewegen kann und zudem eine sehr genaue starre Positionierung des Leitelements erlaubt.

Erfindungsgemäß wird das Leitelement in Umfangsrichtung des Gehäuses zwischen einer eingefahrenen Ablageposition und eine ausgefahrenen Verteilposition bewegt. Die Ablageposition, bei deren Vorliegen das Leitelement zumindest eingefahren, typischerweise hinter eine Gehäusewandung des Gehäuses zurückgezogen, und hierdurch bedingt zumindest im Wesentlichen wirkungslos ist, führt zu einer minimalen Verteilwirkung des Leitelements auf das Restgut im Zuge der Übergabe des letzteren an den dem Axialabscheider nachgeschalteten Häcksler. Die Überführung des Leitelements in seine Ablageposition wird insbesondere dann gewählt, wenn der den Axialabscheider verlassende Restgutstrom in Form einer Schwadablage auf dem Feld abgelegt werden soll. Hierbei wird das Restgut bewusst unverteilt in Bahnen abgelegt, wobei eine Verteilung des Restguts möglichst unterbleiben soll. Aufgrund der Assoziierung der zugehörigen Position des Leitelements mit dieser sogenannten Schwadablage wird diese Position hier als "Ablageposition" bezeichnet. Demgegenüber beschreibt die "Verteilposition" des Leitelements diejenige, in der das Leitelement vollständig ausgefahren ist, das heißt dessen Wirkung im Hinblick auf eine Umlenkung des den Axialabscheider verlassenen Restgutstroms maximal ist.

Die Bewegung des Leitelements zwischen seiner Ablageposition und seiner Verteilposition erfolgt erfindungsgemäß linear in Umfangsrichtung des Gehäuses, wobei sich das Leitelement gewissermaßen auf einem Kreisbogen um die Längsachse des Abscheiderotors bewegt. Hierbei bleibt ein Abstand des Leitelements von besagter Längsachse des Abscheiderotors unverändert. Dies ist insoweit vorteilhaft, als die Energie, mit der der Restgutstrom auf das Leitelement trifft, grundsätzlich unabhängig von seiner Position relativ zu dem Gehäuse ist. Hierdurch wird erreicht, dass die Verteilwirkung des Leitelements besser steuerbar ist, da die Anzahl der zu berücksichtigenden Einstellparameter reduziert ist.

Erfindungsgemäß wird das Leitelement kontinuierlich zyklisch zwischen seiner Ablageposition und seiner Verteilposition Z bewegt. Das kontinuierliche Bewegen erlaubt es, den Restvolumenstrom fortwährend auf den nachgeschalteten Häcksler zu verteilen, wobei eine statische Positionierung des Leitelements vermieden wird. Mithin werden durchgängig wechselnde Bereiche des Häckslers mit Restgut beschickt, wodurch eine gleichmäßige Beschickung des Häckslers und in direkter Folge eine gleichmäßige Verteilung des Restguts auf dem Feld erzielt werden kann. Eine statische bzw. feste Positionierung des Leitblechs ist gleichwohl ohne Weiteres denkbar.

Weiterhin kann es besonders vorteilhaft sein, wenn ein Winkelbereich, der sich zwischen der Ablageposition und der Verteilposition des Leitelements erstreckt, mindestens 30°, vorzugsweise mindestens 35°, weiter vorzugsweise mindestens 40°, beträgt. Eine Bewegbarkeit des Leitelements über diesen Winkelbereich hinweg ermöglicht eine Verteilung des Restguts über die gesamte Breite des jeweilig nachgeschalteten Häckslers selbst dann, wenn die Breite des Häckslers verhältnismäßig groß sein sollte.

Betreffend den Antrieb des Leitelements kann es zudem vorteilhaft sein, wenn der Axialabscheider über mindestens einen Hebelmechanismus verfügt, mittels dessen ein linearer Hub eines das Leitelement antreibenden Aktors in eine Bewegung des Leitelements übersetzbar ist, die in Umfangsrichtung des Gehäuses gerichtet ist. Insbesondere kann das Leitelement entlang einer gekrümmten Führungseinrichtung geführt sein, die an die Krümmung der Wandung des Gehäuses angepasst ist. Der Hebelmechanismus erlaubt es dabei, die lineare Bewegung des Aktors, der insbesondere von einer Kolben-Zylinder-Einheit gebildet sein kann, in eine solche, der Krümmung der Führung folgende Bewegung zu überführen. Eine entsprechende Ausgestaltung ist dem nachstehenden Ausführungsbeispiel zu entnehmen. Zudem erlaubt ein Hebelmechanismus die Einstellung eines Übersetzungsverhältnisses zwischen dem Aktor und dem Leitelement, wobei vorzugsweise der Hub des Aktors überproportional in die gewünschte Gleitbewegung des Leitelements übersetzt wird.

Das erfindungsgemäße Verfahren ist dadurch gekennzeichnet, dass das Leitelement kontinuierlich zyklisch zwischen seiner Ablageposition und seiner Verteilposition bewegt wird. Hierbei bleibt der radiale Abstand des Leitelements von der Längsachse des Abscheiderotors zumindest im Wesentlichen konstant. Das erfindungsgemäße Verfahren ist mittels des erfindungsgemäßen Axialabscheiders besonders einfach durchführbar. Die sich hierdurch ergebenden Vorteile sind vorstehend bereits dargelegt. Insbesondere kann mittels der kontinuierlich zyklischen Bewegung des Leitelements eine besonders homogene Verteilung des aus dem Abgabebereich abgegebenen Restgutstroms auf den dem Axialabscheider nachgeschalteten Häcksler erfolgen.

In einer besonders vorteilhaften Ausgestaltung dieses Verfahrens wird das Leitelement nicht-linearer bewegt. Insbesondere ist es denkbar, dass eine Bewegungsgeschwindigkeit des Leitelements in Bewegungsbereichen, die der Ablageposition und/oder der Verteilposition zugeordnet sind, geringer ist als in einem mittleren Bewegungsbereich des Leitelements. Eine derartige Bewegung des Leitelements hat zur Folge, dass die prinzipbedingt am wenigsten bestickten Randbereiche des Häckslers zusätzlich mit Restgut beaufschlagt werden. Dies ist in einem Mittelbereich des Häckslers nicht erforderlich, da dieser über weite Bewegungsbereiche des Leitelements hinweg durchgehend zumindest anteilig mit Restgut beschickt wird. Hinsichtlich der Zuteilung von Restgut besonders benachteiligt ist ein dem Leitelement abgewandter Randbereich des Häckslers, der vermehrt mit Restgut beschickt werden muss, um letztlich eine gleichmäßige Beschickung des Häckslers über dessen gesamte Breite hinweg zu erreichen. Entsprechend ist ein Bewegungsprofil des Leitelements vorteilhaft, bei dem eine Bewegungsgeschwindigkeit des Leitelements in seinem der Verteilposition zugeordneten Bewegungsbereich gegenüber der sonstigen Bewegungsgeschwindigkeit verlangsamt ist, sodass das Verteilelement im Ergebnis möglichst lange in der Verteilposition oder in der Nähe der Verteilposition verbleibt und eine entsprechende Umlenkung des Restguts bewirken kann.

Die Erfindung ist nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher,
- Fig. 2:: Eine perspektivische Darstellung eines Abgabebereichs eines erfindungsgemäßen Axialabscheiders, wobei sich ein Leitelement des Axialabscheiders in seiner Ablageposition befindet,
- Fig. 3:: Die perspektivische Darstellung gemäß Figur 2, wobei sich das Leitelement in seiner Verteilposition befindet,
- Fig. 4a - 4b:: Zwei Details verschiedenartig ausgestalteter Leitelemente,
- Fig. 5:: Eine perspektivische Ansicht eines erfindungsgemäßen Axialabscheiders,
- Fig. 6:: Eine weitere perspektivische Ansicht des Axialabscheiders gemäß Figur 5,
- Fig. 7:: Eine weitere Ansicht des Axialabscheiders gemäß Figur 5,
- Fig. 8:: Eine schematische Darstellung einer Verteilung eines Restgutstroms auf einen dem Axialabscheider nachgeschalteten Häcksler, wobei sich das Leitelement in seiner Verteilposition befindet, und
- Fig. 9:: Die schematische Darstellung gemäß Figur 8, wobei sich das Leitelement in seiner Ablageposition befindet.

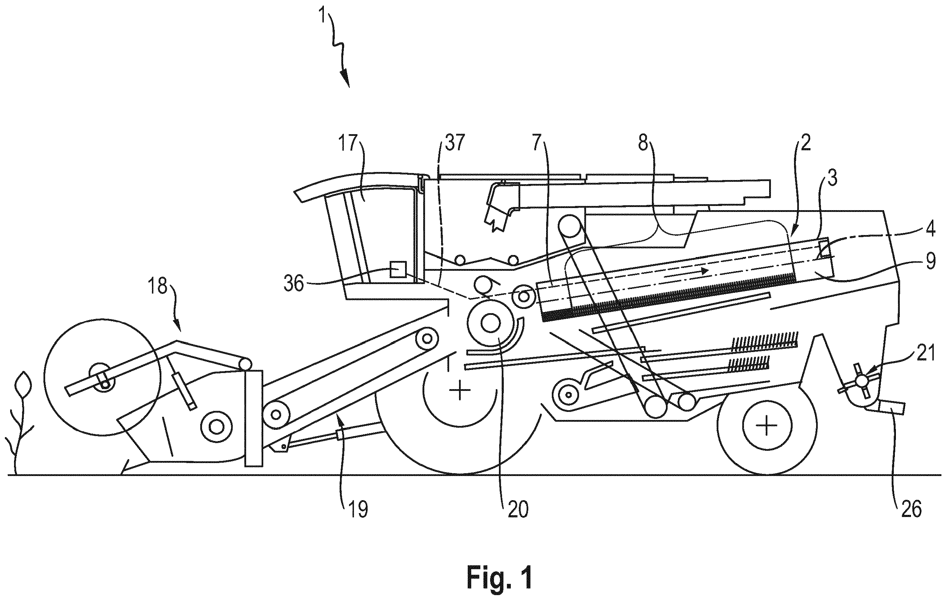

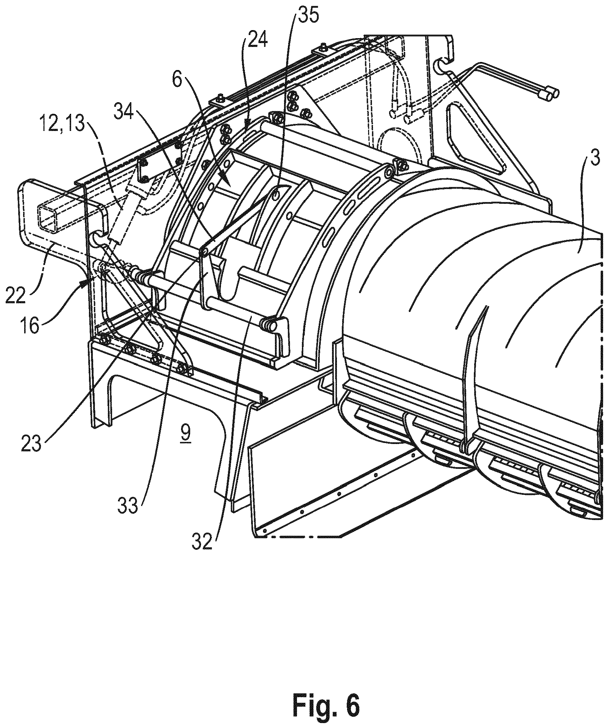

Ein Ausführungsbeispiel, das in den **Figuren 1 bis 9** gezeigt ist, umfasst einen erfindungsgemäßen Mähdrescher **1,** der mit einem erfindungsgemäßen Axialabscheider **2** ausgestattet ist. Der Axialabscheider **2** dient dazu, einen Erntegutstrom derart zu behandeln, dass ein darin enthaltener Gutanteil von einem verbleibenden Restanteil getrennt wird. Hierbei wird von dem Axialabscheider **2** zunächst in einem Aufnahmebereich **7** der Erntegutstrom von einem vorgeschalteten Dreschorgan **20** aufgenommen. Dem Dreschorgan **20** sind zuvor geschnittene Pflanzen, die mittels eines Schneidwerks **18** von einem Feld geerntet wurden, mittels eines Schrägförderers **19** zugeführt worden, wobei mittels des Dreschorgans **20** der Gutanteil der geschnittenen Pflanzen von übrigen Pflanzenresten, die sodann den Restanteil bilden, gelöst wird. Bei dem Gutanteil handelt es sich typischerweise um Körner eines jeweiligen Getreides. Ein Großteil der abgelösten Körner wird bereits unmittelbar im Bereich des Dreschorgans **20** von den Pflanzenresten abgeschieden. Gleichwohl wird ein verbleibender Gutanteil gemeinsam mit den Pflanzenresten an den nachgeschalteten Axialabscheider **2** übergeben, mittels dessen ein möglichst großer Anteil des verbleibenden Gutanteils abgeschieden und auf diese Weise gewonnen werden kann. Die verbleibenden Pflanzenreste werden schließlich als Restgutstrom an einem rückwärtigen Ende des Mähdreschers **1** ausgeworfen.

Zwecks Trennung des Gutanteils von dem Restgut verfügt der Axialabscheider **2** über einen Abscheidebereich **8,** innerhalb dessen ein drehangetriebener Abscheiderotor **5** mit einem den Abscheiderotor **5** einfassenden Gehäuse **3** zusammenwirkt. Der Abscheiderotor **5** erstreckt sich entlang seiner Längsachse **4,** die parallel zu einer Längsachse des Axialabscheiders **2** orientiert ist. An einem dem Dreschorgan **20** abgewandten Ende weist der Axialabscheider einen Abgabebereich **9** auf, von dem ausgehend ein verbliebener Restgutstrom aus dem Axialabscheider **2** abgegeben wird. Bei dem ausgeworfenen Restgut handelt es sich idealerweise fast ausschließlich um nicht verwertbare Pflanzenreste. Diese können sodann insbesondere einem dem Axialabscheider **2** nachgeschalteten Häcksler **21** zugeführt werden, mittels dessen das Restgut zerkleinert und schließlich mittels Spreugebläsen **26** aus dem Mähdrescher **1** abgeworfen wird. Hierbei ist es von besonderem Interesse, den Restgutstrom möglichst homogen auf dem Feld zu verteilen, um insbesondere eine Verteilung eines Restkornanteils, der unvermeidbar in dem Restgutstrom enthalten ist, in gleichmäßiger Weise zu gewährleisten. Hierzu ist es von Bedeutung, den Restgutstrom bereits innerhalb des Mähdreschers **1** gleichmäßig zu verteilen, wobei insbesondere eine homogene Beschickung des Häckslers **21** von Bedeutung ist.

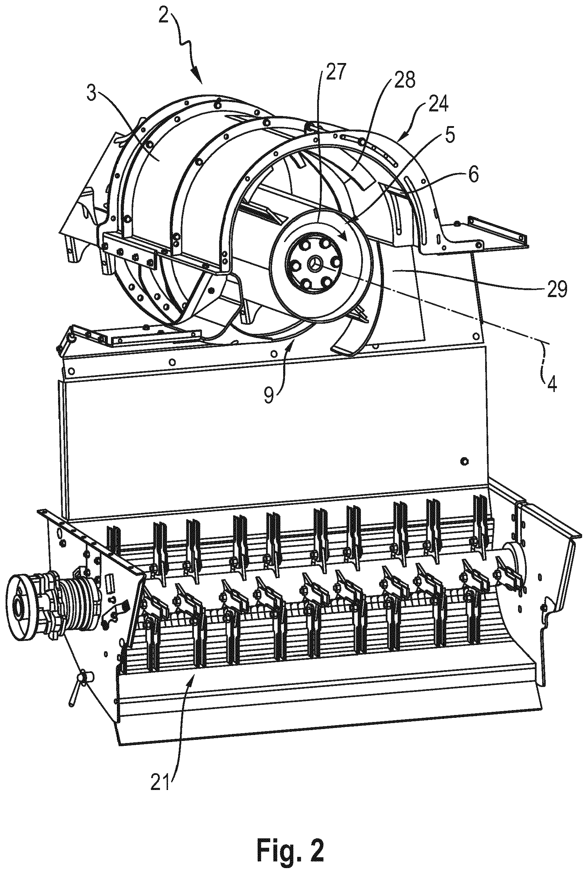

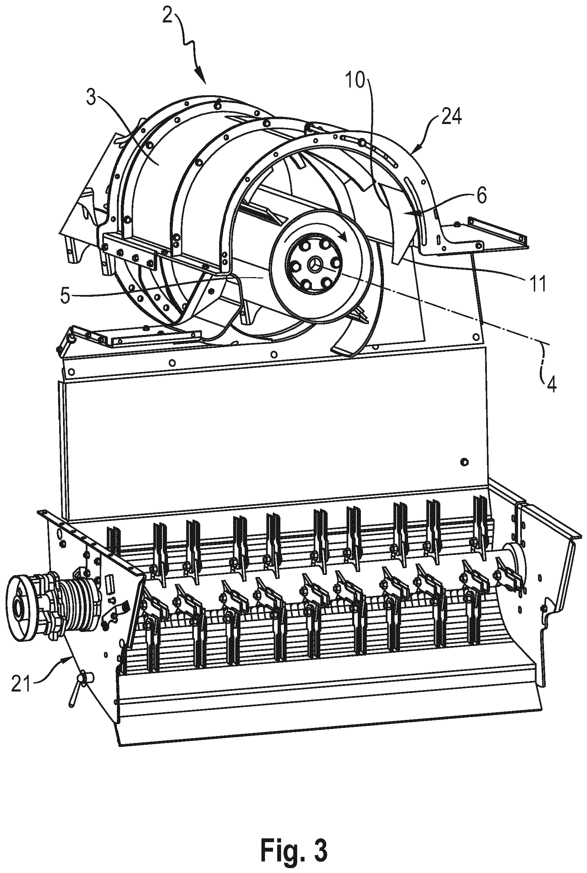

Um dies zu erreichen, ist der erfindungsgemäße Axialabscheider **2** mit einem Leitelement **6** ausgestattet, das relativ zu dem Gehäuse **3** des Axialabscheiders **2** bewegbar ist. Dies ergibt sich insbesondere anhand der **Figuren 2** **und** **3****.** Der Abscheiderotor **5** rotiert innerhalb des Gehäuses **3** um seine Längsachse **4** in eine Drehrichtung **27,** die in den **Figuren 2** **und** **3** dem Uhrzeigersinn entspricht. Zwecks Transports des Erntegutstroms ausgehend von dem Aufnahmebereich **7** hin zu dem Abgabebereich **9** des Axialabscheiders **2** ist das Gehäuse **3** an seiner Innenwandung mit spiralförmigen Leitblechen **28** ausgestattet. Im Zuge der Führung des Erntegutstroms entlang der Innenwandung des Gehäuses **3,** die durch die Drehbewegung des Abscheiderotors **5** bedingt ist, wird das Erntegut sukzessive entlang des Axialabscheiders **2** geführt, bis es schließlich den Abgabebereich **9** desselben erreicht. Bei Erreichen des Abgabebereich **9** trifft der mittlerweile in einen Restgutstrom überführte Erntegutstrom, aus dem ein Gutanteil durch Wirkung des Axialabscheiders **2** abgetrennt wurde, gewissermaßen in Form eines spiralförmigen Stroms aus dem Axialabscheider **2** aus, wobei infolge der Ausgestaltung der Leitbleche **28** vornehmlich ein seitlicher Abströmbereich **29** des Axialabscheiders **2** mit dem Restgutstrom beschickt wird. Das Leitelement **6** ist diesem Abströmbereich **29** zugeordnet, sodass es mit dem Restgutstrom zusammenwirken kann. Hierbei kann das Leitelement **6** eine Umlenkwirkung auf den Restgutstrom entfalten, um den Restgutstrom in gewünschter Weise auf den nachgeschalteten Häcksler **21** zu verteilen.

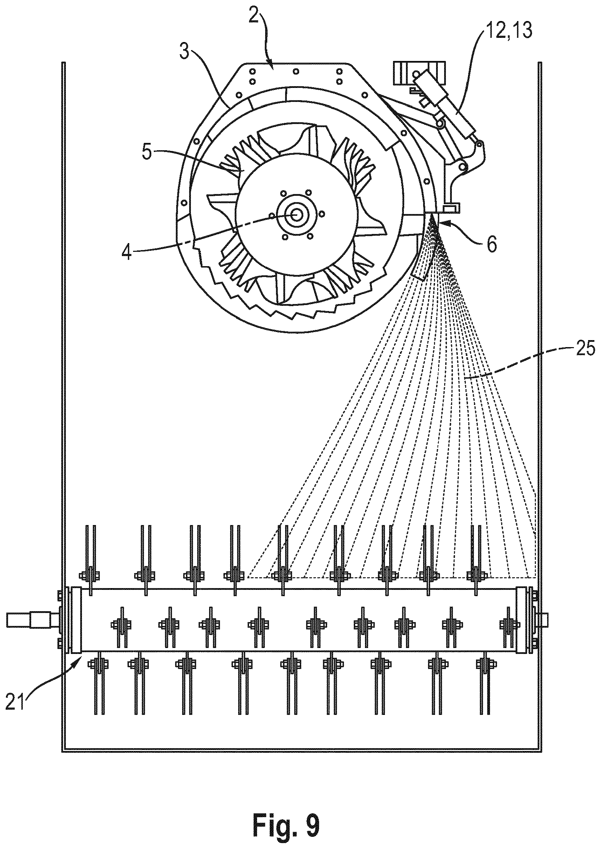

Um die Verteilung des Restgutstroms verändern zu können, ist das Leitelement **6** zwischen einer in **Figur 2** gezeigten Ablageposition und einer in **Figur 3** gezeigten Verteilposition relativ zu dem Gehäuse **3** bewegbar. Insbesondere ist das Leitelement **6,** das in dem gezeigten Beispiel gekrümmt ausgebildet ist, mittels einer Führungseinrichtung **24** entlang einer Wandung des Gehäuses **3** geführt, sodass es mittels einer Bewegung in Umfangsrichtung des Gehäuses **3** bewegbar ist. Erfindungsgemäß Z bleibt ein Abstand **14** des Leitelements **6** von der Längsachse **4** des Abscheiderotors **5** unverändert. Bei Vorliegen in seiner Ablageposition ist das Leitelement **6** zumindest im Wesentlichen wirkungslos, wobei eine Beeinflussung des Restgutstroms im Hinblick auf dessen Verteilung auf den dem Axialabscheider **2** nachgeschalteten Häcksler **21** kaum oder gar nicht stattfindet. Es ist mithin davon auszugehen, dass bei Vorliegen des Leitelements **6** in seiner Ablageposition der Restgutstrom im Wesentlichen einen vertikal unterhalb des Abströmbereichs **29** befindlichen Bereich des Häckslers **21** erreichen wird. Eine Veranschaulichung eines entsprechenden Verteilbereichs **25** ist beispielhaft **Figur 9** entnehmbar.

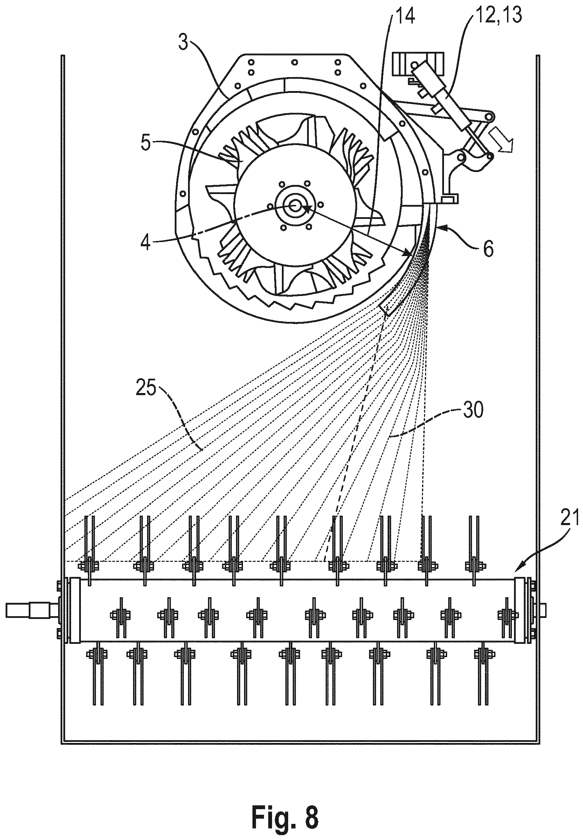

Demgegenüber wirkt das Leitelement **6** bei Vorliegen in seiner Verteilposition maximal, wobei dessen Verteilerwirkung den Restgutstrom in Richtung eines dem Abströmbereich **29** abgewandten Randbereichs des Häckslers **21** lenkt. Dies wird dadurch geschaffen, dass der Restgutstrom bei Austritt aus dem Abgabebereich **9** auf das Leitelement **6** trifft und hierdurch seitlich abgelenkt wird. Eine sich infolgedessen einstellende Verteilerwirkung ist beispielhaft anhand eines entsprechenden Verteilbereichs **25** in **Figur 8** veranschaulicht.

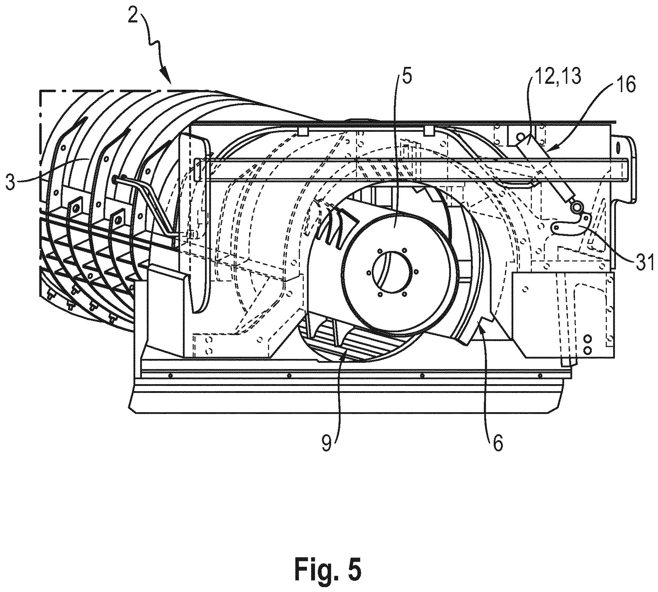

Letztgenannte Figur berücksichtigt bereits die erfindungsgemäße Ausgestaltung des verwendeten Leitelements **6.** Diese gestaltet sich derart, dass eine Randkante **11** des Leitelements **6** zumindest teilweise schräg oder gestuft ausgebildet ist. In dem gezeigten Beispiel betrifft die die dem übrigen Axialabscheider **2** abgewandte Randkante **11** des Leitelements **6,** wie sich beispielsweise auch anhand von **Figur 5** ergibt. Eine gegenüberliegende Randkante **10,** die dem Axialabscheider **2** zugewandt ist, ist in der gewohnt geraden Form ausgebildet.

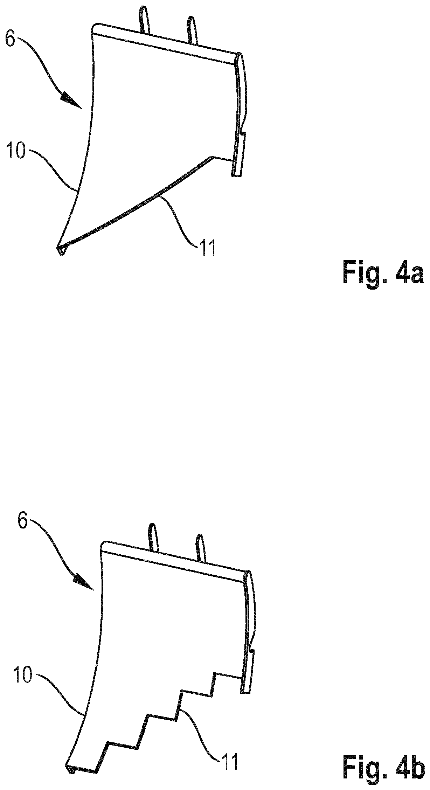

Beispielhafte Ausgestaltungen eines solchen Leitelements **6** sind in den **Figuren 4a und 4b** dargestellt. Hierbei ist das beispielhafte Leitelement **6** gemäß **Figur 4a** mit einer schräg ausgebildeten Randkante **11** ausgestattet, während das Leitelement **6** gemäß **Figur 4b** mit einer gestuften Randkante **11** ausgebildet ist. Die spezielle Ausgestaltung einer Randkante **11** hat zur Folge, dass eine Oberfläche, auf die der Restgutstrom beim Austritt aus dem Axialabscheider **2** trifft, gegenüber einem solchen Leitelement reduziert ist, das eine solche schräge oder gestufte Randkante nicht aufweist, sondern eine typische rechteckförmige Oberfläche hat. Letztere stellt sich ein, wenn beide Randkanten 10, 11 parallel zueinander verlaufen.

Die technische Wirkung eines Leitelements **6** mit schräger oder gestufte Randkante **11** besteht darin, dass ein Teil des Restgutstroms, der auf den Bereich der Oberfläche des Leitelements **6** treffen würde, der vorhanden wäre, wenn die schräge oder gestufte Form nicht vorhanden wäre, nicht umgelenkt wird, wie es bei einem im Stand der Technik üblichen Leitelement der Fall ist. Mit anderen Worten wird mittels der schrägen oder gestuften ausgestalteten Form mindestens einer der Randkanten **10, 11** des Leitelements **6** die verteilende Wirkung desselben bewusst reduziert, sodass auch bei Vorliegen des Leitelements **6** in dessen Verteilposition zumindest noch ein gewisser Anteil des Restgutstroms im Wesentlichen vertikal nach unten ausgehend von dem Abgabebereich **9** in den Häcksler **21** fallen kann. Wie vorstehend bereits dargelegt, ist eine entsprechende Ausgestaltung bei der Darstellung des Verteilbereichs **25** des Restgutstroms in **Figur 8** bereits berücksichtigt. Dort wird besonders gut veranschaulicht, dass ein Unterbereich **30** des Verteilbereichs **25** ohne die schräge oder gestufte Ausgestaltung der Randkante **11** gewissermaßen ein "Schattenbereich" wäre, in den bei Vorliegen des Leitelements **6** in dessen Verteilposition kein oder kaum Restgut fallen könnten. Der entsprechende Bereich des Häckslers **21** bliebe mithin während der Verweildauer des Leitelements **6** in seiner Verteilposition "unbeschickt", wodurch eine Verteilung des Restgutstroms benachteiligt wäre. Mittels der erfindungsgemäßen Ausgestaltung des Leitelements **6** wird dieser Unterbereich **30** hingegen selbst dann mit Restgut beschickt, wenn das Leitelement **6** in seiner ausgefahrenen Verteilposition vorliegt.

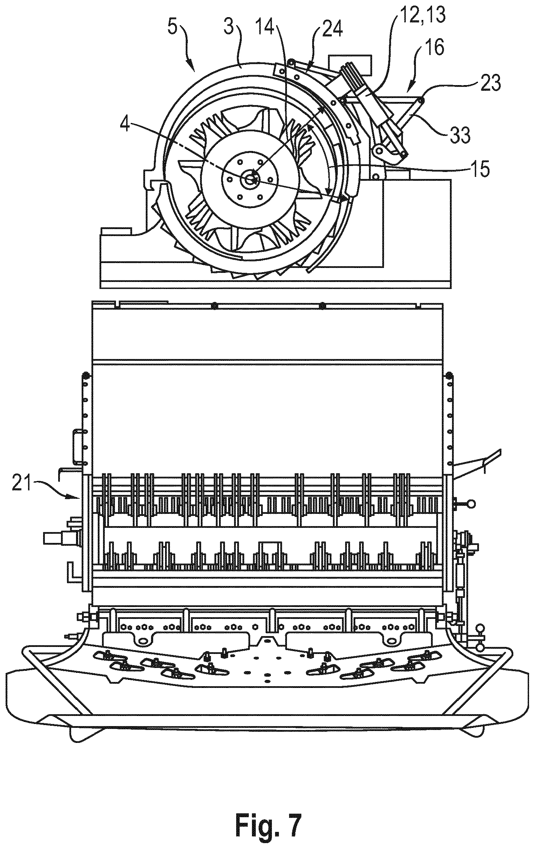

In besonders vorteilhafter Weise ist der hier gezeigte Axialabscheider **2** mit einem Hebelmechanismus **16** ausgestattet, mittels dessen eine lineare Bewegung eines Aktors **12** in die gewünschte Bewegung des Leitelements **6** entlang des Umfangs des Gehäuses **3** übersetzt wird. Der Aktor **12** ist in dem gezeigten Beispiel von einem elektrohydraulischen Zylinder **13** gebildet. Dieser wirkt mittels eines Hebelarms **31** auf eine Welle **32** die um eine Drehachse **22** drehbar an dem Gehäuse **3** gelagert. An der Welle **32** ist ein weiterer Hebelarm **33** montiert, der im Zuge der Betätigung des Aktors **12** gemeinsam mit der Welle **32** um die Drehachse **22** rotiert. An seinem der Welle **32** abgewandten Ende weist der Hebelarm **33** ein Gelenk **23** auf, an das sich ein Übertragungselement **34** anschließt. Letzteres ist schließlich ebenfalls unter Ausbildung eines Gelenks **35** mit dem Leitelement **6** gekoppelt. Das Übertragungselement **34,** das hier gewissermaßen als Pendelstab wirkt, bewirkt eine Bewegung des Leitelements **6** entlang seiner Führungseinrichtung **24** im Zuge der Verdrehung des Hebelarms **33** um die Drehachse **22.** Auf diese Weise wird der Hebelmechanismus **16** insgesamt gewissermaßen als Getriebe, mittels dessen eine lineare Bewegung des Aktors **12** in eine betragsmäßig größere Bewegung des Leitelements **6** übersetzbar ist. Hierbei ist insbesondere ein Längenverhältnis der beiden Hebelarme **31, 33** von Bedeutung, das in dem gezeigten Beispiel 1:3 beträgt. Hierdurch wird bewirkt, dass das Leitelement **6** mit einem vergleichsweise geringen Hub des elektrohydraulischen Zylinders **13** vollständig zwischen seiner Ablageposition und seiner Verteilposition bewegt werden kann. In dem gezeigten Beispiel beträgt einen Winkelbereich **15,** über den hinweg das Leitelement **6** in Umfangsrichtung des Gehäuses **3** bewegt werden kann, ca. 50°. Dies ergibt sich besonders gut anhand von **Figur 7****.**

Erfindungsgemäß wird das Leitelement **6** während eines Betriebs des Mähdreschers **1** kontinuierlich zyklisch zwischen seiner Ablageposition und seiner Verteilposition bewegt. Dies hat den Vorteil, dass der den Axialabscheider **2** verlassender Restgutstrom fortwährend verteilt wird, sodass der nachgeschalteten Häcksler **21** über seine gesamte Breite hinweg mit Restgut beschickt wird. Hierdurch wird letztlich der Vorteil erzielt, dass den Häcksler **21** verlassendes, gehäckseltes Restgut besonders gleichmäßig verteilt und mithin besonders homogen auf dem Feld abgelegt werden kann.

In dem gezeigten Beispiel ist der erfindungsgemäße Mähdrescher **1** in besonders vorteilhafter Weise mit einer Steuereinheit **36** ausgestattet, die in der Fahrerkabine **17** angeordnet ist. Diese Steuereinheit **36** ist mittels einer Leitung **37** mit dem Aktor **12** verbunden, der auf das Leitelement **6** einwirken kann. Hierdurch wird die Möglichkeit geschaffen, dass der den Mähdrescher **1** führende Maschinenführer mittels Bedienung der Steuereinheit **36** einen Einfluss auf die Bewegung des Leitelements **6** relativ zu dem Gehäuse **3** des Axialabscheiders **2** nehmen kann. Beispielsweise ist es denkbar, dass der Maschinenführer eine unbefriedigende Verteilung des Restguts auf dem Feld beobachtet und infolgedessen eine Veränderung beispielsweise eines Bewegungsprofils des Leitelements **6** bewirken möchte.

### Bezugszeichenliste

- 1: Mähdrescher
- 2: Axialabscheider
- 3: Gehäuse
- 4: Längsachse
- 5: Axialrotor
- 6: Leitelement
- 7: Aufnahmebereich
- 8: Abscheidebereich
- 9: Abgabebereich
- 10: Randkante
- 11: Randkante
- 12: Aktor
- 13: Zylinder
- 14: Abstand
- 15: Winkelbereich
- 16: Hebelmechanismus
- 17: Fahrerkabine
- 18: Schneidwerk
- 19: Schrägförderer
- 20: Dreschorgan
- 21: Häcksler
- 22: Drehachse
- 23: Gelenk
- 24: Führungseinrichtung
- 25: Verteilbereich
- 26: Spreugebläse
- 27: Drehrichtung
- 28: Leitblech
- 29: Abströmbereich
- 30: Unterbereich
- 31: Hebelarm
- 32: Welle
- 33: Hebelarm
- 34: Übertragungselement
- 35: Gelenk
- 36: Steuereinheit
- 37: Leitung

## Patentansprüche

1. Verfahren zum Betrieb eines Axialabscheider (2) für einen Mähdrescher (1), umfassend
- mindestens ein Gehäuse (3),
- einen innerhalb des Gehäuses (3) um seine Längsachse (4) drehantreibbar gelagerten Abscheiderotor (5) sowie
- mindestens ein an dem Gehäuse (3) angeordnetes Leitelement (6),
wobei das Gehäuse (3) einen Aufnahmebereich (7) zur Aufnahme eines zu bearbeitenden Erntegutstroms aufweist,
wobei der Erntegutstrom in einem stromabwärts des Aufnahmebereichs (7) befindlichen Abscheidebereich (8) mittels Zusammenwirkens des Abscheiderotors (5) mit dem Gehäuse (3) bearbeitbar ist, sodass ein in dem Erntegutstrom enthaltener Gutanteil aus dem Erntegutstrom abscheidbar und auf diese Weise der Erntegutstrom in einen Restgutstrom überführbar ist,
wobei das Gehäuse (3) stromabwärts des Abscheidebereichs (8) einen Abgabebereich (9) zur Abgabe des Restgutstroms aus dem Axialabscheider (2) aufweist,
wobei das Leitelement (6) dem Abgabebereich (9) zugeordnet und mittels des Leitelements (6) eine Strömungsrichtung des aus dem Abgabereich (9) austretenden Restgutstroms beeinflussbar ist,
wobei das Leitelement (6) - in Richtung der Längsachse (4) des Abscheiderotors (5) betrachtet - einander gegenüberliegende Randkanten (10, 11) aufweist, wobei mindestens eine Randkante (11) des Leitelements (6) zumindest teilweise schräg oder gestuft ausgebildet ist,
**dadurch gekennzeichnet, dass**
das Leitelement (6) kontinuierlich zyklisch zwischen einer Ablageposition und einer der Ablageposition gegenüberliegenden Verteilposition relativ zu dem Gehäuse (3) bewegt wird,
wobei ein radialer Abstand (14) des Leitelements (6) von der Längsachse (4) des Abscheiderotors (5) im Zuge der Bewegung konstant bleibt.

2. Verfahren nach Anspruch 1, **dadurch gekennzeichnet, dass** die dem Abgabebereich (9) abgewandte Randkante (11) schräg oder gestuft ausgebildet ist.

3. Verfahren nach Anspruch 1 oder 2, **dadurch gekennzeichnet, dass** ein Längen-Breiten-Verhältnis des Leitelements (6) höchstens 4:1, vorzugsweise 3,5:1, weiter vorzugsweise 3:1, beträgt.

4. Verfahren nach einem der Ansprüche 1 bis 3, **dadurch gekennzeichnet, dass** das Leitelement (6) in Umfangsrichtung des Gehäuses (3) gekrümmt ausgebildet, sodass es einer Krümmung des Gehäuses (3) bezogen auf die Längsachse (4) des Abscheiderotors (5) angepasst ist.

5. Verfahren nach einem der Ansprüche 1 bis 4, **dadurch gekennzeichnet, dass** ein Aktor (12), mittels dessen das Leitelement (6) relativ zu dem Gehäuse (3) bewegbar ist, elektrohydraulisch angetrieben ist, wobei der Aktor (12) vorzugsweise von einem elektrohydraulischen Zylinder (13) gebildet ist.

6. Verfahren nach Anspruch 1, J **dadurch gekennzeichnet, dass** ein sich zwischen der Ablageposition und der Verteilposition erstreckender Winkelbereich (15), über den hinweg das Leitelement (6) bewegbar ist, mindestens 30°, vorzugsweise mindestens 35°, weiter vorzugsweise mindestens 40°, beträgt.

7. Verfahren nach einem der Ansprüche 1 bis 6, **gekennzeichnet durch** einen Hebelmechanismus (16), mittels dessen ein linearer Hub eines das Leitelement (6) antreibenden Aktors (12) in eine in Umfangsrichtung des Gehäuses (3) gerichtete Bewegung übersetzbar ist.

8. Verfahren nach einem der vorherigen Ansprüche, **dadurch gekennzeichnet, dass** das Leitelement (6) nicht-linear bewegt wird, wobei insbesondere eine Bewegungsgeschwindigkeit des Leitelements (6) in der Ablageposition und/oder der Verteilposition zugeordneten Bewegungsbereichen geringer ist als in einem mittleren Bewegungsbereich des Leitelements (6).

## Claims

1. A method for operating an axial separator (2) for a combine harvester (1), comprising
- at least one housing (3),
- a separating rotor (5) which is mounted inside the housing (3) for driven rotation about its longitudinal axis (4), as well as
- at least one guide element (6) disposed on the housing (3),
wherein the housing (3) has an intake region (7) for receiving a flow of harvested material to be processed,
wherein the flow of harvested material can be processed in a separating region (8) located downstream of the intake region (7) by means of cooperation of the separating rotor (5) with the housing (3), so that a fraction of material contained in the flow of harvested material can be separated out of the flow of harvested material, and in this manner the flow of harvested material can be converted into a flow of residual material, wherein the housing (3) has a discharge region (9) downstream of the separating region (8) for discharging the flow of residual material out of the axial separator (2),
wherein the guide element (6) is associated with the discharge region (9) and by means of the guide element (6), a direction of flow of the flow of residual material discharging from the discharge region (9) can be influenced,
wherein the guide element (6) - considered in the direction of the longitudinal axis (4) of the separating rotor (5) - has mutually opposing marginal edges (10, 11), wherein at least one marginal edge (11) of the guide element (6) is at least partially inclined or stepped in configuration,
**characterized in that**
the guide element (6) is continuously moved in a cyclic manner between a storage position and a distribution position opposite to the storage position relative to the housing (3),
wherein a radial distance (14) of the guide element (6) from the longitudinal axis (4) of the separating rotor (5) remains constant during the course of the movement.

2. The method according to claim 1, **characterized in that** the marginal edge (11) facing away from the discharge region (9) is inclined or stepped in configuration.

3. The method according to claim 1 or claim 2, **characterized in that** a length-width ratio for the guide element (6) is at most 4:1, preferably 3.5:1, more preferably 3:1.

4. The method according to one of claims 1 to 3, **characterized in that** the guide element (6) is curved in the circumferential direction of the housing so that it is adapted to a curvature of the housing (3) with respect to the longitudinal axis (4) of the separating rotor (5).

5. The method according to one of claims 1 to 4, **characterized in that** an actuator (12) by means of which the guide element (6) can be moved relative to the housing (3) is electrohydraulically operated, wherein the actuator (12) is preferably formed by an electrohydraulic cylinder (13).

6. The method according to claim 1, **characterized in that** an angular range (15) which extends between the storage position and the distribution position through which the guide element (6) can be moved is at least 30°, preferably at least 35°, more preferably at least 40°.

7. The method according to one of claims 1 to 6, **characterized by** a lever mechanism (16) by means of which a linear travel of an actuator (12) driving the guide element (6) can be translated into a movement orientated in the circumferential direction of the housing (3).

8. The method according to one of the preceding claims, **characterized in that** the movement of the guide element (6) is non-linear, wherein in particular a speed of movement of the guide element (6) in the ranges of movement associated with the storage position and/or the distribution position is lower than in a central range of movement of the guide element (6).

## Revendications

1. Procédé de fonctionnement d'un séparateur axial (2) pour une moissonneuse-batteuse (1), incluant
- au moins un carter (3),
- un rotor séparateur (5) monté entraînable en rotation autour de son axe longitudinal (4) à l'intérieur du carter (3) ainsi que
- au moins un élément de guidage (6) disposé contre le carter (3),
le carter (3) comportant une zone de réception (7) pour recevoir un flux de produit récolté à traiter,
le flux de produit récolté étant traitable dans une zone de séparation (8) se trouvant en aval de la zone de réception (7) au moyen d'une coopération du rotor séparateur (5) avec le carter (3), de sorte qu'une fraction de produit contenue dans le flux de produit récolté est séparable du flux de produit récolté et que, de cette façon, le flux de produit récolté est transférable vers un flux de produit résiduel,
le carter (3) comportant, en aval de la zone de séparation (8), une zone d'évacuation (9) pour évacuer le flux de produit résiduel hors du séparateur axial (2),
l'élément de guidage (6) étant associé à la zone d'évacuation (9) et une direction d'écoulement du flux de produit résiduel sortant de la zone d'évacuation (9) pouvant être influencée au moyen de l'élément de guidage (6),
l'élément de guidage (6) comportant des arêtes de bord (10, 11) à l'opposé l'une de l'autre - vues dans la direction de l'axe longitudinal (4) du rotor séparateur (5) -, au moins une arête de bord (11) de l'élément de guidage (6) étant conçue au moins en partie en biais ou de manière étagée,
**caractérisé en ce que**
l'élément de guidage (6) est déplacé continuellement cycliquement par rapport au carter (3) entre une position de dépose et une position d'éparpillement opposée à la position de dépose,
une distance radiale (14) de l'élément de guidage (6) par rapport à l'axe longitudinal (4) du rotor séparateur (5) restant constante au cours du déplacement.

2. Procédé selon la revendication 1, **caractérisé en ce que** l'arête de bord (11) située à l'opposé de la zone d'évacuation (9) est conçue en biais ou de manière étagée.

3. Procédé selon la revendication 1 ou 2, **caractérisé en ce qu'**un rapport longueur-largeur de l'élément de guidage (6) est d'au plus 4:1, préférentiellement de 3,5:1, plus préférentiellement de 3:1.

4. Procédé selon une des revendications 1 à 3, **caractérisé en ce que** l'élément de guidage (6) est conçu de manière courbée dans la direction circonférentielle du carter (3), de sorte qu'il est adapté à une courbure du carter (3) par rapport à l'axe longitudinal (4) du rotor séparateur (5).

5. Procédé selon une des revendications 1 à 4, **caractérisé en ce qu'**un actionneur (12), au moyen duquel l'élément de guidage (6) est déplaçable par rapport au carter (3), est entraîné électrohydrauliquement, l'actionneur (12) étant formé de préférence par un vérin électrohydraulique (13).

6. Procédé selon la revendication 1, **caractérisé en ce qu'**une plage angulaire (15), qui s'étend entre la position de dépose et la position d'éparpillement et sur laquelle l'élément de guidage (6) est déplaçable, est d'au moins 30°, préférentiellement d'au moins 35°, plus préférentiellement d'au moins 40°.

7. Procédé selon une des revendications 1 à 6, **caractérisé par** un mécanisme à levier (16) au moyen duquel une course linéaire d'un actionneur (12) entraînant l'élément de guidage (6) est convertible en un mouvement orienté dans la direction circonférentielle du carter (3).

8. Procédé selon une des revendications précédentes, **caractérisé en ce que** l'élément de guidage (6) est déplacé non linéairement, en particulier une vitesse de déplacement de l'élément de guidage (6) dans des plages de déplacement associées à la position de dépose et/ou à la position d'éparpillement étant plus basse que dans une plage de déplacement médiane de l'élément de guidage (6).
